# EUROPÄISCHE PATENTSCHRIFT

(11) **EP 1 285 793 B1**
(45) Veröffentlichungstag und Bekanntmachung des Hinweises auf die Patenterteilung: **21.06.2006**
(21) Anmeldenummer: 01116283.1
(22) Anmeldetag: 05.07.2001
(51) Int. Cl.: B60J 5/04, B62D 65/00

(54) **Verfahren und Vorrichtung zur Herstellung einer Tür oder Klappe**
Method and device for the production of a door or a lid
Procédé et dispositif pour la fabrication d'une porte ou d'un capot

(43) Veröffentlichungstag der Anmeldung: 26.02.2003
(73) Patentinhaber: Ford Global Technologies, LLC., Dearborn MI 48126 (US)
(72) Erfinder: Coemert, Guener, 50678 Köln (DE); Strausfeld, Bruno, 50129 Bergheim (DE); Elms, Daryl Francis, Ardleigh, Colchester, Essex CO7 7PD (GB)
(74) Vertreter: Drömer, Hans-Carsten

(56) Entgegenhaltungen:
- EP-A- 0 147 530
- US-A- 5 829 123
- US-B1- 6 247 218

## Beschreibung

Die Erfindung bezieht sich auf ein Verfahren und eine Vorrichtung zur Herstellung einer Tür oder Klappe aus wenigstens zwei Bauteilen oder Baugruppen, und eine so herstellbare Tür oder Klappe.

Insbesondere für Verkehrsmittel werden zum Verschluss von Öffnungen des Fahrzeugs- oder Flugzeugkörpers Türen und Klappen aus zwei oder mehr Bauteilen oder Baugruppen hergestellt. Insbesondere im Fahrzeugbau, speziell bei der Herstellung von Personenwagen, müssen solche Türen oder Klappen in größten Stückzahlen unter großem Kostendruck hergestellt werden.

Dabei werden an die Türen und Klappen sowie an deren Herstellung nur schwer vereinbare Anforderungen gestellt. Türen und Klappen sollen dicht schließen, um Schmutz- und Regenwassereintritt zu verhindern und Windgeräusche auch bei hohen Geschwindigkeiten zu vermeiden. Weiterhin sollen möglichst gleichbleibende Spaltmaße zu benachbarten Karosserieteilen eingehalten werden, um ein hochwertiges äußeres Erscheinungsbild abzugeben. Dazu ist die Einhaltung möglichst enger Toleranzen erforderlich. Zugleich soll die Herstellung jedoch preiswert und möglichst durch automatische Fertigungseinrichtungen möglich sein, Nach- und Justierarbeiten sollen vermieden werden, Ausschuss ist nicht akzeptabel.

Aus EP 0 818 339 A1 ist ein Verfahren zur Herstellung einer PKW-Tür aus einem Aluminiumrahmen, einem stählernen unteren Türkörper und einer Türbeplankung bekannt. Dabei soll zur Erzielung einer guten passiven Sicherheit an einem separaten Fliessband der Aluminiumrahmen mit dem Türkörper über Absorberteile durch Verschrauben montiert werden. Die Absorberteile sowie das Türschloss sollen zuvor durch Punktschweißen mit dem Türkörper so verbunden sein, dass bei einem AufpraII des Fahrzeugs die Absorber Verformungsenergie aufnehmen, bevor der Türrahmen deformiert wird. Die Türbeplankung soll ebenfalls vor der Montage des Türrahmens an dem Türkörper befestigt und die aus Türkörper, Beplankung, Absorbern und Schloss bestehende Baugruppe vor der Montage des Türrahmens einer kataphoretischen Behandlung unterzogen werden.

Aus US 5,907,897 A ist ein Verfahren zur Herstellung einer Fahrzeugtür bekannt, bei dem zur Verringerung der Montagearbeit und zur Verbesserung der Qualität zunächst ein oberer Türrahmen mit einer in Höhe der späteren Gürtellinie angeordneten Querstrebe und je einer abwärts gerichteten vorderen und hinteren Strebe versehen sein soll, und eine Seitenscheibe sowie die Führungen und Betätigungseinrichtungen zum Öffnen und Schließen des Seitenfenster montiert sein sollen. Anschließend soll diese vormontierte Baugruppe in einen aus einem äußeren und einem inneren Türelement gebildeten Türkörper durch eine in dessen Oberseite befindliche Öffnung eingesetzt werden. Die Positionierung des oberen Türrahmens soll dabei durch die Querstrebe in einer dafür vorgesehenen Aufnahme in dem Türkörper erfolgen, die Befestigung durch eine Reihe von durch das innere Türelement eingesetzten Schrauben. Durch das vorgeschlagenen Verfahren soll insbesondere die Montage der Fenstermechanik vereinfacht und verbessert werden, da diese nicht mehr in dem engen Türkörper vorgenommen werden müsse.

Aus DE 199 47 209 A1 ist ein Fensterrahmenelement für eine Fahrzeugtür bekannt, der im wesentlichen einen vorderen und einen hinteren Holm umfasst, die zur Montage des Fensterrahmens an einem Türkörper in in dem Türkörper dafür vorgesehenen Aufnahmeschächte bei der Montage eingeführt werden. Es ist als problematisch vorbekannt, dass ein solcher Fensterrahmen schwierig zu montieren ist, wenn er zusätzlich einen unteren Querträger umfasst, der an sich vorteilhaft ist, um als Befestigungsmöglichkeit für vormontierbare Elemente, wie Fensterheber, oder als Fensterschachtabdeckung zu dienen, da Abstandstoleranzen zwischen vorderem und hinterem Schacht im Türkörper nicht ausgeglichen werden können. Zugleich macht ein solcher Querträger das Fensterrahmenelement in sich stabiler und steifer, so dass es als vormontierte Baugruppe leichter zu transportieren und handzuhaben ist, ohne dass das Risiko besteht, dass vormontierte Baugruppen oder gar eine Fensterscheibe bei der Montage herausfällt. Hierzu wird vorgeschlagen, eine Querstrebe mit einem festlegbaren Längsausgleich vorzusehen, z.B. in Form eines Teleskops oder über einen Langlochbefestigung, die vor dem Einsetzen des Fensterrahmens in den Türkörper für den Toleranzausgleich gelöst werden kann.

Aus DE 199 62 699 A1 ist eine Fahrzeugtür und ein Verfahren zu deren Herstellung bekannt, bei dem eine Fahrzeugtür aus einem oberen Fensterrahmen und einem Türkörper mit einer Außenbeplankung hergestellt wird. Dabei sollen ein vorderer und ein hinterer Schenkel durch Einstecken in den Türkörper und nachfolgendes Befestigen der eingesteckten Schenkelteile mit dem Türkörper verbunden werden. Um den Fensterrahmen in aus anderen Gründen zweckmäßigerweise insbesondere aus einem Strangpressprofil herstellen zu können und dennoch eine ausreichend große Kontakt- und Montagefläche an den in den Türkörper einzusetzenden Schenkeln zu erhalten, werden zusätzliche Adapterteile vorgeschlagen, die z.B. aus Leichtmetallguss gefertigt sein können und bei der Vormontage mit dem Fensterrahmen verbunden werden. Diese Adapterteile werden dann in die Aufnahmeschächte des Türkörpers eingeführt und bieten so eine hinreichend große Anlagefläche zur Befestigung und zum Toleranzausgleich.

Aus EP 0 962 347 A1 ist eine Fahrzeugtür bekannt, die aus einem (Fenster-)Rahmen, einem inneren Türkörper, einer Außenbeplankung und weiteren Teile besteht. Zur Kostenreduzierung wird dabei vorgeschlagen, die Tür so auszubilden, dass der innere Türkörper entweder zu seiner Längs- oder Hochachse symmetrisch aufgebaut ist. Dadurch soll erreicht werden, dass für rechte und linke Türen die gleichen inneren Türkörper verwendet werden können, wodurch Montage- und Lagerhaltungskosten reduziert werden sollen.

Aus DE 196 21 328 A1 ist schließlich bekannt, zur Herstellung einer Fahrzeugtür in Rahmenbauweise zur Montage des umlaufenden geschlossenen Rahmens an einem unteren Türkörper Ausgleichsstücke vorzusehen, die an dem Rahmen angebracht sein sollen. Zur Anpassung an die Einbaubedingungen infolge der Sollmaßabweichungen bei Rahmen und Türkörper werden die Ausgleichsstücke spanend nachbearbeitet, um die Anschlussmaße auf 01 - 0,2 mm genau herzustellen.

Alle diese bekannten Lösungen bieten gewisse Vorteile bezogen auf spezifische Problemstellungen, jedoch werden Maßnahmen zur Kostenreduzierung entweder ohne Rücksicht auf die Fertigungsqualität vorgeschlagen oder Maßnahmen zur Verbesserung der Fertigungsqualität, die zusätzliche Teile oder Arbeitsgänge bedingen und damit zu Kostensteigerungen führen.

Ein Verfahren nach dem Oberbegriff von Anspruch 1 sowie eine Vorrichtung nach dem Oberbegriff von Anspruch 3 sind durch die US-A-5,829,123 bekannt.

Der Erfindung liegt daher die Aufgabe zugrunde, ein Verfahren und eine Vorrichtung bereitzustellen, mit deren Hilfe sich Fahrzeugtüren und -Klappen aus mehreren Teilen oder Baugruppen vorzugsweise maschinell genau und kostengünstig herstellen lassen.

Diese Aufgabe wird erfindungsgemäß gelöst durch ein Verfahren der eingangs erwähnten Art, bei dem eine erste Baugruppe durch eine erste Arretiervorrichtung hinsichtlich aller drei Freiheitsgrade einer Ebene auf einer ersten Montageeinheit festgelegt wird, bei dem wenigstens eine zweite Baugruppe hinsichtlich aller drei Freiheitsgrade einer Ebene auf wenigstens einer zweiten Montageeinheit durch wenigstens eine zweite Arretiervorrichtung festgelegt wird, und wenigstens die zweite Montageeinheit relativ zu der ersten Montageeinheit bewegt wird, bis zumindest die zweite Baugruppe relativ zu der ersten Baugruppe eine vorbestimmte Position erreicht hat, wobei die vorbestimmte Position durch einen zu der ersten Arretiervorrichtung ortsfesten Indikator für die zweite Baugruppe definiert ist.

Insbesondere wenn der Indikator in der Nähe einer Aussenkante der zu fertigenden Einheit angeordnet ist, lassen sich mit Hilfe der Erfindung schnell und einfach passgenaue Türen und Klappen herstellen. Dies kann dadurch erfolgen, dass eine erste Baugruppe ortsfest festgelegt wird und eine zweite Baugruppe soweit relativ dazu verfahren wird, bis der Indikator das Erreichen der Solllage anzeigt. Nun können die Teile in allen bekannten Verbindungstechniken montiert werden und es wird ohne aufwendige Mess- und Justagearbeiten oder Nachbearbeitung von Passflächen einen in den Außenabmessungen recht genaue Tür oder Klappe erhalten. Auf deren Einhaltung kommt es ausschließlich an, wenn mechanische Eigenschaften für das Unfallverhalten und Spaltmaße für das optische Erscheinungsbild und die Verringerung von Windgeräuschen entsprechend den Vorgaben der Konstrukteure eingehalten werden sollen.

Dabei kommt es gemäß der Erfindung letztlich gar nicht darauf an, ob die einzelnen Baugruppen besonders genau den Sollmaßen entsprechen, da die Positionierung nicht über gemeinsame Funktions- oder Montageflächen erfolgt, sondern weitgehend nach den insgesamt geforderten Abmessungen des Gesamtbauteils Tür oder Klappe. Durch die Erfindung addieren sich Fertigungsfehler der einzelnen Baugruppen nicht wie bei den Verfahren nach dem Stand der Technik, sondern Fertigungsfehler der einzelnen Baugruppen werden sogar weitestgehend ausgeglichen.

Für einen einfachen und sicheren Fertigungsprozess ist es zweckmäßig, wenn die Relativbewegung zwischen der ersten Montageeinheit und wenigstens der zweiten Montageeinheit entlang eines Freiheitsgrades, vorzugsweise translatorisch, erfolgt. So kann die Bewegung einfach und sicher, z.B. über einen Pneumatikzylinder erfolgen.

Die Aufgabe wird ferner erfindungsgemäß gelöst durch eine Vorrichtung der eingangs erwähnten Art mit einer ersten Montageeinheit, wenigstens einer zweiten Montageeinheit, und einem zu der ersten Montageeinheit ortsfesten Indikator, wobei die erste Montageeinheit eine erste Arretiervorrichtung zur Festlegung einer ersten Baugruppe hinsichtlich aller drei Freiheitsgrade einer Ebene aufweist, wobei die wenigstens zweite Montageeinheit zumindest eine zweite Arretiervorrichtung aufweist zur Festelegung wenigstens einer zweiten Baugruppe hinsichtlich aller drei Freiheitsgrade einer Ebene, und wobei die wenigstens eine zweite Montageeinheit durch einen Antrieb wenigstens relativ zu der ersten Montageeinheit bewegbar ist, bis zumindest die zweite Baugruppe relativ zu der ersten Baugruppe eine vorbestimmte Position erreicht hat, und wobei die vorbestimmte Position für die zweite Baugruppe durch zu der ersten Montageeinheit ortsfesten Indikator definiert ist.

Die Aufgabe wir ferner erfindungsgemäß gelöst durch eine Vorrichtung zum Verschluss von Öffnungen des Fahrzeugs- oder Flugzeugkörpers (Tür oder Klappe) aus wenigstens zwei Bauteilen oder Baugruppen, von denen wenigstens ein Bauteil oder eine Baugruppe Aufnahmen für eine erste Arretiervorrichtung zur Festlegung einer ersten Baugruppe hinsichtlich aller drei Freiheitsgrade einer Ebene aufweist, und wenigstens ein weiteres Bauteil oder eine weitere Baugruppe Aufnahmen für eine zweite Arretiervorrichtung aufweist zur Festlegung wenigstens der zweiten Baugruppe hinsichtlich aller drei Freiheitsgrade einer Ebene, und wenigstens ein Bauteil oder eine Baugruppe einen Referenzpunkt oder eine Referenzmarke für einen Indikator aufweist.

Besonders zweckmäßig und zur Vermeidung von Überbestimmungen vorteilhaft ist es, wenn die Aufnahmen eines Bauteils oder einer Baugruppe ein Loch und ein Langloch umfassen.

Besonders bevorzugt und betriebssicher ist es, wenn der Indikator durch einen mechanischen Anschlag gebildet ist.

Es kann aber insbesondere in Verbindung mit elektronisch gesteuerten Fertigungseinrichtungen auch zweckmäßig sein, wenn der Indikator durch eine Lichtschranke, oder einen kapazitiven oder induktiven Näherungsschalter oder eine Bilderfassungseinrichtung gebildet ist.

Eine gute Positioniergenauigkeit bei einfachstem Aufbau ergibt sich, wenn die erste und/oder die zweite Arretiervorrichtung jeweils zwei Führungsstifte umfasst, die vorzugsweise derart angeordnet sind, dass eine Gerade, die die zwei Führungsstifte einer Arretiervorrichtung verbindet, mit der Richtung der Relativbewegung zwischen erster und zweiter Montageeinheit einen Winkel ∝ von wenigstens 45°, besonders vorzugsweise einen annähernd rechten Winkel bildet.

Wirtschaftlich lässt sich die Erfindung besonders gut nutzen, wenn die erste Baugruppe durch einen Tür- oder Klappenkörper und die zweite Baugruppe durch einen Tür- oder Fensterrahmen gebildet wird.

Besonders geringe Maßabweichungen beim Fertigteil lassen sich unabhängig von der Genauigkeit der einzelnen Baugruppen erhalten, wenn die erste Arretiervorrichtung auf der ersten Montageeinheit in einem von dem Indikator entfernten Bereich der ersten Montageeinheit angeordnet ist.

Die Erfindung soll im folgenden anhand eines in den Figuren dargestellten Ausführungsbeispiels näher erläutert werden. Es zeigen:
- Fig. 1: eine erfindungsgemäße Vorrichtung zur Herstellung einer Fahrzeugtür in schematischer Draufsicht in einer ersten Betriebsstellung;
- Fig. 2: die erfindungsgemäße Vorrichtung aus Fig. 1 in einer vereinfachten Seitenansicht;
- Fig. 3: die erfindungsgemäße Vorrichtung wie in Fig. 1 in einer zweiten Betriebsstellung;
- Fig.: 4 eine schematische Ansicht eines Türkörpers und eines Fensterrahmens einer erfindungsgemäß hergestellten Tür; und
- Fig. 5: die erfindungsgemäße Vorrichtung aus Fig. 3 ohne Darstellung der Bauteile einer Fahrzeugtür.

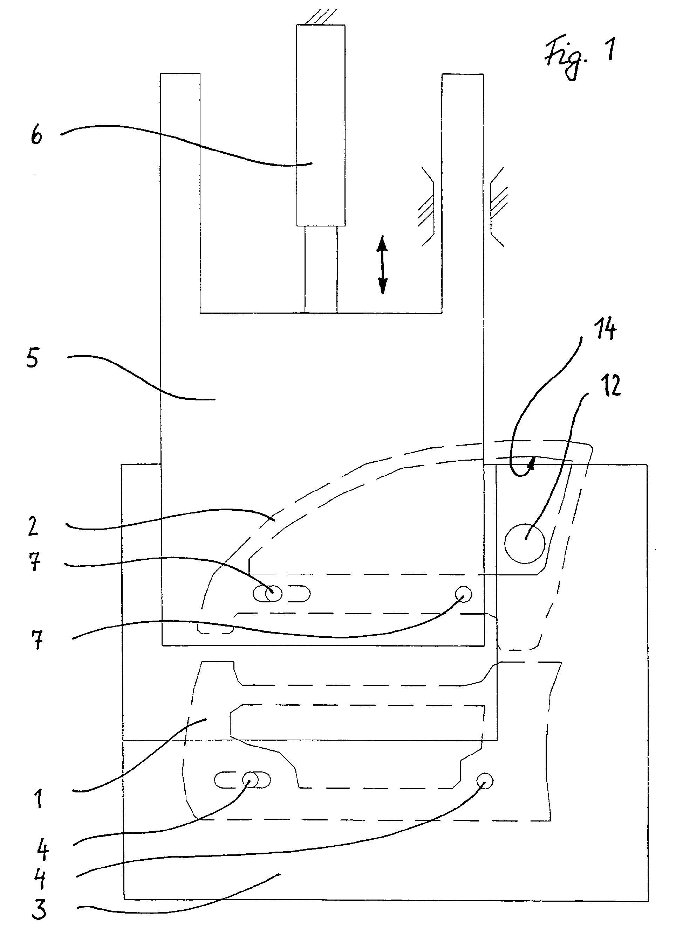

Die Darstellung in Figur 1 zeigt eine schematische Draufsicht auf eine erfindungsgemäße Vorrichtung, hier zum Beispiel zur Herstellung einer Fahrzeugtür aus zwei Baugruppen, deren Position schematisch angedeutet ist, wobei hier beispielsweise die erste Baugruppe ein Türkörper 1 und die zweite Baugruppe ein Fensterrahmen 2 ist.

Die erfindungsgemäße Vorrichtung, die hier beispielsweise dargestellt ist, umfasst eine erste Montageeinheit 3, die beispielsweise ortsfest mit einem Maschinengestell verbunden sein kann. Auf der Oberseite der ersten Montageeinheit 3 sind zwei Arretierstifte 4 angeordnet, die auf der ersten Montageeinheit 3 eine erste Arretiervorrichtung zur Festlegung des Türkörpers 1 hinsichtlich aller drei Freiheitsgrade einer Ebene bilden, vorzugsweise orientiert entsprechend der Zeichnungsebene in Figur 1.

Weiterhin umfasst die erfindungsgemäße Vorrichtung eine zweite Montageeinheit 5, die vorzugsweise mit herkömmlichen Führungsmitteln und Antriebseinrichtungen relativ zu der ersten Montageeinheit 3 beweglich ist. Besonders zweckmäßig ist es, die zweite Montageeinheit 5 gegenüber der ersten Montageeinheit 3 nur in einer Richtung translatorisch vor- und zurückbewegbar auszubilden, wofür zum Beispiel ein herkömmlicher doppelt wirkender Pneumatikzylinder 6 verwendet werden kann. Die Verwendung eines Pneumatikzylinders 6 kann besonders zweckmäßig sein, da eine Druckluftversorgung in entsprechenden Fertigungsstätten in der Regel zur Verfügung steht und ein solcher Pneumatikzylinder 6 einfach angesteuert werden kann. Im Hinblick auf die vorliegende Erfindung ist weiterhin zweckmäßig, dass eine Zustellkraftbegrenzung beim Verfahren eines Pneumatikzylinders 6 besonders einfach realisiert werden kann.

Weiterhin weist die zweite Montageeinheit 5 zweckmäßig zwei Arretierstifte 7 auf, die eine zweite Arretiervorrichtung zur Festlegung einer zweiten Baugruppe, hier einem Fensterrahmen 2, hinsichtlich aller drei Freiheitsgrade einer Ebene, hier der Zeichnungsebene, ermöglichen.

Die Arretierstifte 4 und 7 können zweckmäßig beispielsweise aus gehärteten Stahlstiften geeigneten Durchmessers und geeigneter Länge gebildet sein und beispielsweise einen Durchmesser von 25 mm aufweisen.

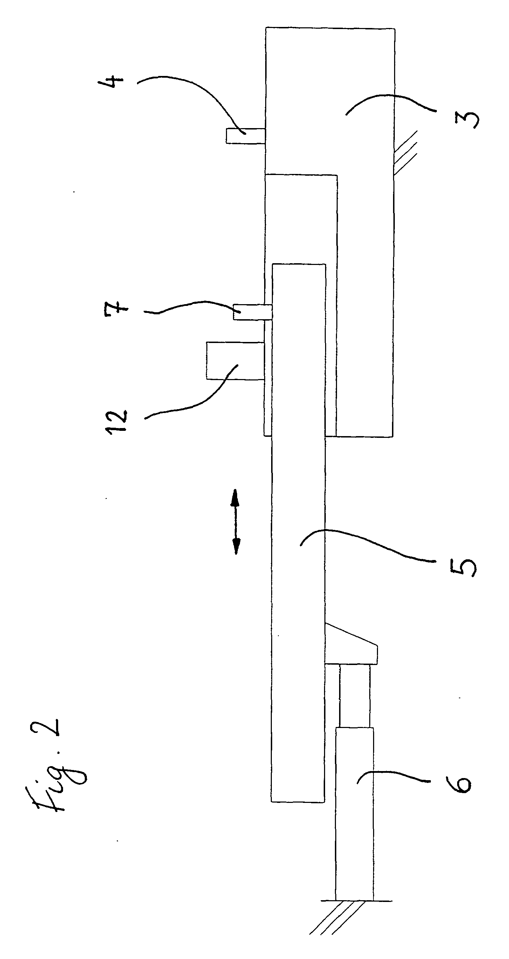

Zur Verdeutlichung der Anordnung ist ein Längsschnitt der Anordnung aus Figur 1 in Figur 2 dargestellt.

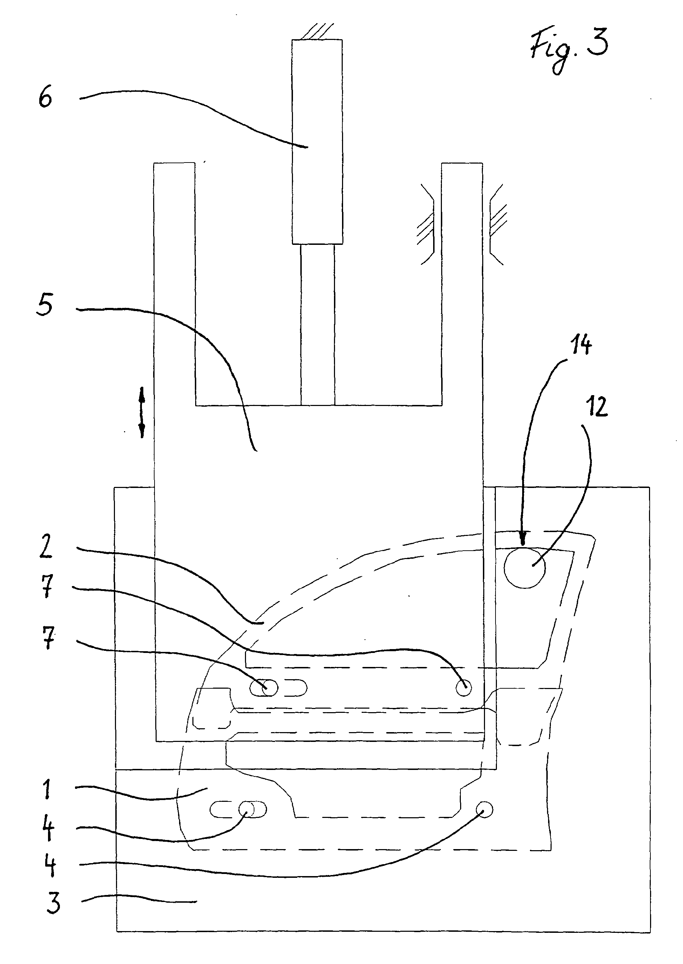

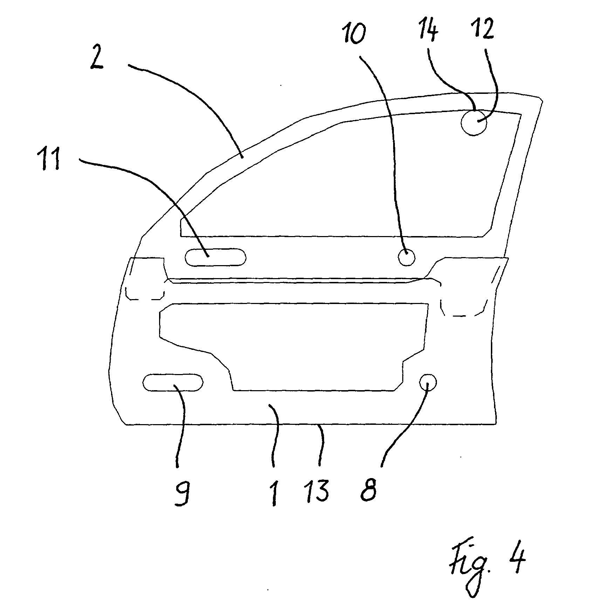

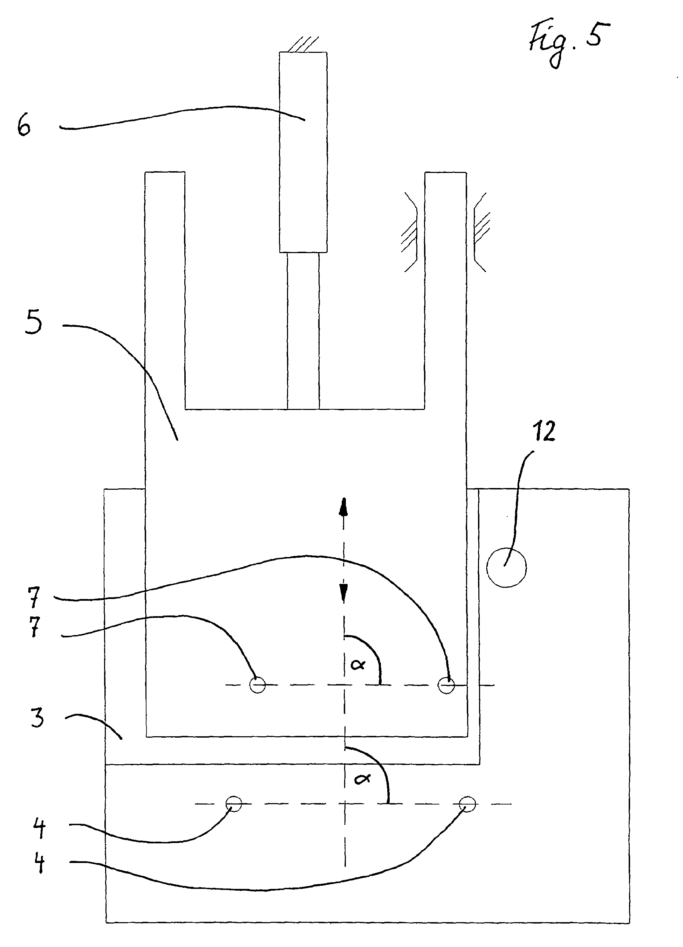

Zur Herstellung einer erfindungsgemäßen Tür, wie sie in Figur 4 schematisch dargestellt ist, mit Hilfe einer erfindungsgemäßen Vorrichtung wird zweckmäßig in bekannter Weise, zum Beispiel durch einen Handhabungsroboter, ein Türkörper 1 zweckmäßig mit seiner späteren Innenseite auf die erste Montageeinheit 3 aufgelegt, so dass die Arretierstifte 4 in die in Figur 4 erkennbaren Aufnahmen für die Arretierstifte 4 eingreifen. Die Aufnahmen werden dabei zweckmäßig durch ein Loch 8 und ein Langloch 9 in dem Türkörper 1 gebildet. Durch das Loch 8 ist in Zusammenwirkung mit einem Arretierstift 4 sichergestellt, dass die entsprechende Position des Türkörpers in der Zeichnungsebene gemäß Figur 1 translatorisch festgelegt ist. Die obere Innenkante 14 des Fensterrahmens 2 ist zweckmäßig als Referenzpunkt oder Referenzmarke ausgebildet, um mit dem Anschlag 12 zusammenzuwirken. Zur Verdeutlichung ist der Anschlag 12 in seiner Lage nach dem Verfahren in die zweite Betriebsstellung der zweiten Montageeinheit 5 mit dem Fensterrahmen 2 in Figur 4 mit dargestellt.

Durch das Zusammenwirken des zweiten Arretierstiftes 4 mit dem Langloch 9 ist sichergestellt, dass sich der Türkörper 1 nicht gegenüber der ersten Montageeinheit um den Arretierstift 4, der mit dem Loch 8 zusammenwirkt, drehen kann. Die Verwendung eines Langloches ist dabei besonders zweckmäßig, um Überbestimmungen und damit Verklemmungen oder andere Störungen des Produktionsablaufes zu vermeiden, die infolge von Abstandsabweichungen von Loch 8 und Langloch 9 in dem Türkörper 1 gegenüber den Sollmaßen entstehen könnten. Es ist offensichtlich, dass dabei Loch 8 und Langloch 9 gegeneinander ausgetauscht werden könnten, oder deren Funktion zum Beispiel von einem einzigen Stern- oder Winkelelement mit einer entsprechend anders geformten Arretiervorrichtung gebildet sein könnten. Es ist aber davon auszugehen, dass die Verwendung von zylindrischen Arretierstiften 4 und entsprechenden Löchern 8, 9 besonders einfach und damit kostengünstig herzustellen ist.

Ebenfalls in bekannter Art und Weise durch einen Handhabungsroboter oder auch von Hand kann der Fensterrahmen 2 sinngemäß entsprechend auf die zweite Montageeinheit 5 aufgelegt werden, wobei die Arretierstifte 7 in ein entsprechendes Loch 10 und ein Langloch 11 in dem Fensterrahmen 2 eingreifen. Zweckmäßig sind dabei Loch 10 und Langloch 11 an einer Stelle des Fensterrahmens 2 untergebracht, der später von Verkleidungselementen abgedeckt wird, die beispielsweise auch unter Verwendung von Loch 10 und Langloch 11 in üblicher Weise mit Clipbefestigungen angebracht werden können.

Weiterhin weist die erste Montageeinheit 3 noch entfernt von den Arretierstiften 4 einen Indikator auf, der zweckmäßig direkt an der ersten Montageeinheit 3 befestigt oder zumindest gegenüber der ersten Montageeinheit 3 ortsfest ist. Dieser Indikator dient bei der Herstellung der Tür zur Erkennung der vorbestimmten Position des Fensterrahmens 2 gegenüber dem Türkörper 1 in der zweiten Betriebsstellung der Vorrichtung, in der Türkörper 1 und Fensterrahmen 2 miteinander verbunden werden sollen (siehe Fig. 3).

Besonders zweckmäßig ist es dabei, wenn dieser Indikator durch einen an der ersten Montageeinheit 3 entfernt von den Arretierstiften 4 angeordneten Anschlag 12 gebildet ist, wobei dieser Anschlag ein an die Innenkontur der Oberkante des Fensterrahmens 2 angepasstes Formteil oder auch nur ein Zylinderstift entsprechend den Arretierstiften 4 oder 7 sein kann.

Der Indikator kann anstelle des Anschlages 12 auch durch eine Lichtschranke, einen kapazitiven oder einen induktiven Näherungsschalter oder eine Bilderfassungseinrichtung gebildet sein, um die Vorrichtung in eine vorhandene elektronisch gesteuerte Fertigungseinrichtung einzubinden. Andererseits hat jedoch die Ausführungsform mit einem mechanischen Anschlag 12 den großen Vorteil, dass die mit den vorgenannten alternativen Indikatoren verbundenen Nachteile hinsichtlich einer Störung der Betriebsabläufe durch Softwarefehler oder Störungen der Steuerungen nicht auftreten, auf jeden Fall vereinfacht die Verwendung eines mechanischen Anschlages 12 entsprechend den Aufwand zur Steuerung der Vorrichtung.

Wie aus Figur 2 ohne weiteres ersichtlich ist, ist es zweckmäßig, wenn die erste Betriebsstellung der zweiten Montageeinheit 5 beim Auflegen des Fensterrahmens 2 so gewählt wird, dass der Anschlag 12, der an der ersten Montageeinheit 3 befestigt ist, sich innerhalb der Fensterhöhlung des Fensterrahmens befindet.

Wenn die Teile Türkörper 1 und Fensterrahmen 2 entsprechend auf der ersten Montageeinheit 3 und der zweiten Montageeinheit 5 arretiert sind, wird durch Betätigung des Pneumatikzylinders 6 die zweite Montageeinheit 5 auf die erste Montageeinheit 3 zu bewegt, bis der Fensterrahmen 2 mit einem vorbestimmten Referenzpunkt oder einer Referenzmarke, z.B. der oberen Innenkante 14 des Fensterrahmens 2, an dem Anschlag 12 anliegt und ein weiterer Vorschub der zweiten Montageeinheit 5 und des Fensterrahmens 2 nicht mehr möglich ist. Nun haben Türkörper 1 und Fensterrahmen 2 ihre Sollposition zueinander erreicht und können in jeder üblichen Verbindungstechnik miteinander verbunden werden, zum Beispiel durch Punktschweißen, Verschrauben, Vernieten oder dergleichen.

Werden zudem die Arretierstifte 4 auf der ersten Montageeinheit 3 und die entsprechenden Löcher 8 und 9 in dem Türkörper 1 in der Nähe seiner Unterkante 13 und damit entfernt von dem Anschlag 12 angeordnet, lässt sich eine besonders genaue Tür aus dem Türkörper 1 und dem Fensterrahmen 2 ohne weiteren Aufwand herstellen. Dadurch, dass die Höhe der späteren Tür weitestgehend durch den Abstand der Arretierstifte 4 zu dem Anschlag 12 auf der ersten Montageeinheit 3 bestimmt wird, spielen Maßabweichungen des Türkörpers 1 und des Fensterrahmens 2 nur eine relativ geringe Rolle hinsichtlich der Maßabweichungen der fertigen Tür, zumindest in dieser Richtung. Durch die Erfindung wird gegenüber dem Stand der Technik nicht nur eine deutliche Vereinfachung bei der Montage von Türkörper 1 und Fensterrahmen 2 erreicht, da diese automatisiert werden kann und zusätzliche Hilfsmittel nicht benötigt werden, sondern Fertigungsfehler von Türkörper 1 und Fensterrahmen 2 schlagen gegenüber den bisher bekannten Vorrichtungen und Verfahren kaum auf Fertigungsabweichungen der fertigen Tür durch. Vielmehr kann durch die erfindungsgemäße Ausbildung in gewissem Maß ein Ausgleich von Fertigungsfehlern von Türkörper 1 und Fensterrahmen 2 stattfinden.

Für eine möglichst gute Positioniergenauigkeit ist es schließlich noch zweckmäßig, wenn die Arretierstifte 4 und 7 möglichst so angeordnet sind, dass eine Verbindungsgerade zwischen den Arretierstiften 4 einerseits und den Arretierstiften 7 andererseits möglichst senkrecht zu der Richtung der Relativbewegung zwischen erster Montageeinheit 3 und zweiter Montageeinheit 5 angeordnet ist, zumindest einen Winkel ∝ von wenigstens 45° aufweisen (Figur 5).

Figur 3 zeigt schließlich noch einmal die Anordnung gemäß Figur 1 in einer zweiten Betriebsstellung, bei der Türkörper 1 und Fensterrahmen 2 die Montageposition erreicht haben, in der sie nun auch vollautomatisch in üblichen Verbindungstechniken miteinander verbunden werden können, um eine fertige erfindungsgemäße Tür zu bilden.

Auch wenn die Erfindung vorstehend am Beispiel einer Fahrzeugtür beschrieben worden ist, beschränkt sich die Erfindung nicht auf diese Anwendung, vielmehr eignet sich die Erfindung hervorragend auch für andere Einsatzgebiete, z.B. für Heckklappen von Kombilimousinen oder Kombifahrzeugen.

## Patentansprüche

1. Verfahren zur Herstellung einer Tür oder Klappe aus wenigstens zwei Bauteilen oder Baugruppen (1,2), bei dem eine erste Baugruppe (1) durch eine erste Arretiervorrichtung (4) hinsichtlich aller drei Freiheitsgrade einer Ebene auf einer ersten Montageeinheit (3) festgelegt wird, wobei
wenigstens eine zweite Baugruppe (2) hinsichtlich aller drei Freiheitsgrade einer Ebene auf wenigstens einer zweiten Montageeinheit (5) durch wenigstens eine zweite Arretiervorrichtung (7) festgelegt wird,
und wenigstens die zweite Montageeinheit (5) relativ zu der ersten Montageeinheit (3) bewegt wird, bis zumindest die zweite Baugruppe (2) relativ zu der ersten Baugruppe (1) eine vorbestimmte Position erreicht hat,
**dadurch gekennzeichnet, dass** die vorbestimmte Position durch einen zu der ersten Arretiervorrichtung (4) ortsfesten Indikator (12) für die zweite Baugruppe (2) definiert ist.

2. Verfahren nach Anspruch 1,
**dadurch gekennzeichnet, dass**
die Relativbewegung zwischen der ersten Montageeinheit (3) und wenigstens der zweiten Montageeinheit (5) entlang eines Freiheitsgrades, vorzugsweise translatorisch, erfolgt.

3. Vorrichtung zur Herstellung einer Tür oder Klappe aus wenigstens zwei Bauteilen oder Baugruppen (1,2), mit einer ersten Montageeinheit (3), wenigstens einer zweiten Montageeinheit (5), und einem zu der ersten Montageeinheit (3) ortsfesten Indikator (12),
wobei die erste Montageeinheit (3) eine erste Arretiervorrichtung (4) zur Festlegung einer ersten Baugruppe (1) hinsichtlich aller drei Freiheitsgrade einer Ebene aufweist,
wobei die wenigstens zweite Montageeinheit (5) zumindest eine zweite Arretiervorrichtung (7) aufweist zur Festelegung wenigstens einer zweiten Baugruppe (2) hinsichtlich aller drei Freiheitsgrade einer Ebene,
und wobei die wenigstens eine zweite Montageeinheit (5) durch einen Antrieb (6) wenigstens relativ zu der ersten Montageeinheit (3) bewegbar ist, bis zumindest die zweite Baugruppe (2) relativ zu der ersten Baugruppe (1) eine vorbestimmte Position erreicht hat,
**dadurch gekennzeichnet, daß** die vorbestimmte Position für die zweite Baugruppe (2) durch zu der ersten Montageeinheit (3) ortsfesten Indikator (12) definiert ist.

4. Vorrichtung zum Verschluss von Öffnungen eines Fahrzeugs- oder Flugzeugkörpers aus wenigstens zwei Bauteilen oder Baugruppen (1,2), von denen wenigstens ein Bauteil oder eine Baugruppe (1) Aufnahmen (8,9) für eine erste Arretiervorrichtung (4) zur Festlegung einer ersten Baugruppe (1) hinsichtlich aller drei Freiheitsgrade einer Ebene aufweist, und wenigstens ein weiteres Bauteil oder eine weitere Baugruppe (2) Aufnahmen (10,11) für eine zweite Arretiervorrichtung (7) aufweist zur Festelegung wenigstens der zweiten Baugruppe (2) hinsichtlich aller drei Freiheitsgrade einer Ebene, und wenigstens ein Bauteil oder eine Baugruppe (2) einen Referenzpunkt (14) oder eine Referenzmarke (14) für einen Indikator (12) aufweist.

5. Vorrichtung nach Anspruch 4,
**dadurch gekennzeichnet, dass**
die Aufnahmen eines Bauteils oder einer Baugruppe (1,2) ein Loch (8,10) und ein Langloch (9,11) umfassen.

6. Verfahren nach einem der Ansprüche 1 oder 2 oder Vorrichtung nach einem der Ansprüche 3 bis 5,
**dadurch gekennzeichnet, dass**
der Indikator durch einen mechanischen Anschlag (12) gebildet ist.

7. Verfahren nach einem der Ansprüche 1 oder 2 oder Vorrichtung nach einem der Ansprüche 3 bis 6,
**dadurch gekennzeichnet, dass**
der Indikator durch eine Lichtschranke, oder einen kapazitiven oder induktiven Näherungsschalter oder eine Bilderfassungseinrichtung gebildet ist.

8. Verfahren nach einem der Ansprüche 1 oder 2 oder Vorrichtung nach einem der vorhergehenden Ansprüche 3 bis 7
**dadurch gekennzeichnet, dass**
die erste und/oder die zweite Arretiervorrichtung jeweils zwei Führungsstifte (4,7) umfasst, die vorzugsweise derart angeordnet sind, dass eine Gerade, die die zwei Führungsstifte (4,7) einer Arretiervorrichtung verbindet, mit der Richtung der Relativbewegung zwischen erster (3) und zweiter (5) Montageeinheit einen Winkel ∝ von wenigstens 45°, besonders vorzugsweise einen annähernd rechten Winkel bildet.

9. Verfahren nach einem der Ansprüche 1 oder 2 oder Vorrichtung nach einem der vorhergehenden Ansprüche 3 bis 8
**dadurch gekennzeichnet, dass**
die erste Baugruppe durch einen Tür- oder Klappenkörper (1) und die zweite Baugruppe durch einen Tür- oder Fensterrahmen (2) gebildet wird.

10. Verfahren nach einem der Ansprüche 1 oder 2 oder Vorrichtung nach einem der vorhergehenden Ansprüche 3 bis 9
**dadurch gekennzeichnet, dass**
die erste Arretiervorrichtung (4) auf der ersten Montageeinheit (3) in einem von dem Indikator (12) entfernten Bereich der ersten Montageeinheit (3) angeordnet ist.

## Claims

1. Method for the production of a door or lid comprising at least two components or subassemblies (1, 2), in which a first subassembly (1) is fixed on a first installation unit (3) with regard to all three degrees of freedom of a plane by a first locking device (4), at least one second subassembly (2) being fixed on at least one second installation unit (5) with regard to all three degrees of freedom of a plane by at least one second locking device (7), and at least the second installation unit (5) being moved relative to the first installation unit (3) until at least the second subassembly (2) has reached a predetermined position relative to the first subassembly (1), **characterized in that** the predetermined position is defined by an indicator (12) for the second subassembly (2), which indicator is fixed in position with respect to the first locking device (4).

2. Method according to Claim 1, **characterized in that** the relative movement between the first installation unit (3) and at least the second installation unit (5) takes place, preferably in a translatory manner, along a degree of freedom.

3. Device for the production of a door or lid comprising at least two components or subassemblies (1, 2), with a first installation unit (3), at least one second installation unit (5), and an indicator (12) which is fixed in position with respect to the first installation unit (3), the first installation unit (3) having a first locking device (4) for fixing a first subassembly (1) with regard to all three degrees of freedom of a plane, the at least one second installation unit (5) having at least one second locking device (7) for fixing at least one second subassembly (2) with regard to all three degrees of freedom of a plane, and the at least one second installation unit (5) being movable at least relative to the first installation unit (3) by a drive (6) until at least the second subassembly (2) has reached a predetermined position relative to the first subassembly (1), **characterized in that** the predetermined position for the second subassembly (2) is defined by an indicator (12) which is fixed in position with respect to the first installation unit (3).

4. Device for closing openings of a vehicle body or aircraft body, comprising at least two components or subassemblies (1, 2), of which at least one component or one subassembly (1) has mounts (8, 9) for a first locking device (4) for fixing a first subassembly (1) with regard to all three degrees of freedom of a plane, and at least one further component or one further subassembly (2) has mounts (10, 11) for a second locking device (7) for fixing at least the second subassembly (2) with regard to all three degrees of freedom of a plane, and at least one component or one subassembly (2) has a reference point (14) or a reference mark (14) for an indicator (12).

5. Device according to Claim 4, **characterized in that** the mounts of a component or of a subassembly (1, 2) comprise a hole (8, 10) and an elongated hole (9, 11).

6. Method according to either of Claims 1 and 2 or device according to one of Claims 3 to 5, **characterized in that** the indicator is formed by a mechanical stop (12).

7. Method according to either of Claims 1 and 2 or device according to one of Claims 3 to 6, **characterized in that** the indicator is formed by a light barrier, or by a capacitive or inductive proximity switch or by an image-recording device.

8. Method according to either of Claims 1 and 2 or device according to one of the preceding Claims 3 to 7, **characterized in that** the first and/or the second locking device in each case comprises two guide pins (4, 7) which are preferably arranged in such a manner that a straight line, which connects the two guide pins (4, 7) of a locking device, forms an angle α of at least 45°, particularly preferably approximately a right angle, with the direction of the relative movement between first installation unit (3) and second installation unit (5).

9. Method according to either of Claims 1 and 2 or device according to one of the preceding Claims 3 to 8, **characterized in that** the first subassembly is formed by a door body or lid body (1) and the second subassembly is formed by a door frame or window frame (2).

10. Method according to either of Claims 1 and 2 or device according to one of the preceding Claims 3 to 9, **characterized in that** the first locking device (4) is arranged on the first installation unit (3) in a region of the first installation unit (3) that is remote from the indicator (12).

## Revendications

1. Procédé de fabrication d'une porte ou d'un capot constitué(e) d'au moins deux composants ou modules (1, 2), dans lequel un premier module (1) est fixé par un premier dispositif de blocage (4) dans tous les trois degrés de liberté d'un plan sur une première unité de montage (3),
au moins un deuxième module (2) étant fixé par au moins un deuxième dispositif de blocage (7) dans tous les trois degrés de liberté d'un plan sur au moins une deuxième unité de montage (5),
et au moins la deuxième unité de montage (5) étant déplacée par rapport à la première unité de montage (3) jusqu'à ce qu'au moins le deuxième module (2) ait atteint une position prédéterminée par rapport au premier module (1),
**caractérisé en ce que** la position prédéterminée est définie par un indicateur (12) pour le deuxième module (2), fixé par rapport au premier dispositif de blocage (4).

2. Procédé selon la revendication 1,
**caractérisé en ce que**
le mouvement relatif entre la première unité de montage (3) et au moins la deuxième unité de montage (5) s'effectue le long d'un degré de liberté, de préférence en translation.

3. Dispositif de fabrication d'une porte ou d'un capot constitué(e) d'au moins deux composants ou modules (1, 2), avec une première unité de montage (3), au moins une deuxième unité de montage (5), et un indicateur (12) fixé par rapport à la première unité de montage (3),
la première unité de montage (3) présentant un premier dispositif de blocage (4) pour la fixation d'un premier module (1) dans tous les trois degrés de liberté d'un plan,
l'au moins une deuxième unité de montage (5) présentant au moins un deuxième dispositif de blocage (7) pour la fixation d'au moins un deuxième module (2) dans tous les trois degrés de liberté d'un plan,
et l'au moins une deuxième unité de montage (5) pouvant être déplacée par un entraînement (6) au moins par rapport à la première unité de montage (3), jusqu'à ce qu'au moins le deuxième module (2) ait atteint une position prédéterminée par rapport au premier module (1),
**caractérisé en ce que** la position prédéterminée pour le deuxième module (2) est définie par un indicateur (12) fixé par rapport à la première unité de montage (3).

4. Dispositif de fermeture d'ouvertures d'un corps de véhicule ou d'avion, constitué d'au moins deux composants ou modules (1, 2), dont au moins un composant ou un module (1) présente des logements (8, 9) pour un premier dispositif de blocage (4) pour la fixation d'un premier module (1) dans tous les trois degrés de liberté d'un plan, et au moins un autre composant ou un autre module (2) présentant des logements (10, 11) pour un deuxième dispositif de blocage (7) pour la fixation d'au moins le deuxième module (2) dans tous les trois degrés de liberté d'un plan, et au moins un composant ou un module (2) présentant un point de référence (14) ou une marque de référence (14) pour un indicateur (12).

5. Dispositif selon la revendication 4,
**caractérisé en ce que**
les logement d'un composant ou d'un module (1, 2) comprennent un trou (8, 10) et un trou oblong (9, 11) .

6. Procédé selon l'une quelconque des revendications 1 ou 2 ou dispositif selon l'une quelconque des revendications 3 à 5,
**caractérisé en ce que**
l'indicateur est formé par une butée mécanique (12).

7. Procédé selon l'une quelconque des revendications 1 ou 2 ou dispositif selon l'une quelconque des revendications 3 à 6,
**caractérisé en ce que**
l'indicateur est formé par une barrière lumineuse ou un commutateur de proximité capacitif ou inductif ou un dispositif d'acquisition d'images.

8. Procédé selon l'une quelconque des revendications 1 ou 2 ou dispositif selon l'une quelconque des revendications 3 à 7,
**caractérisé en ce que**
le premier et/ou le deuxième dispositif de blocage comprend à chaque fois deux tiges de guidage (4, 7) qui sont disposées de préférence de telle sorte qu'une droite reliant les deux tiges de guidage (4, 7) d'un dispositif de blocage forme avec la direction du mouvement relatif entre la première (3) et la deuxième (5) unité de montage un angle α d'au moins 45°, en particulier de préférence un angle approximativement droit.

9. Procédé selon l'une quelconque des revendications 1 ou 2 ou dispositif selon l'une quelconque des revendications 3 à 8,
**caractérisé en ce que**
le premier module est formé par un corps de porte ou de capot (1) et le deuxième module est formé par un cadre de porte ou de fenêtre (2).

10. Procédé selon l'une quelconque des revendications 1 ou 2 ou dispositif selon l'une quelconque des revendications 3 à 9,
**caractérisé en ce que**
le premier dispositif de blocage (4) est disposé sur la première unité de montage (3) dans une région de la première unité de montage (3) éloignée de l'indicateur (12).
